# EUROPEAN PATENT APPLICATION

(11) **EP 1 223 525 A2**
(43) Date of publication of application: **17.07.2002**
(21) Application number: 01310678.6
(22) Date of filing: 20.12.2001
(51) Int. Cl.: G06F 17/60

(54) **System and method for mail order business**

(30) Priority: 26.12.2000 JP 2000395486
(71) Applicant: V-Sync Co., Ltd., Tokyo 150-0001 (JP)
(72) Inventor: IBE, Takaya, Jinguumae 6-chome, Shibuya-ku, Tokyo (JP)
(74) Representative: Kemp, Paul Geoffrey

(57) **Abstract**

A goods or service information is broadcasted on television from a TV broadcast station, and supplied to unnamed or many audiences. The audience(purchaser) receives an image pattern which is formed by optical signals and displayed as a management data of goods on one part of display of a television set by means of an optical signal receiver of his or her own cellular phone, and then designates any goods displayed on the television by operating the cellular phone. The cellular phone collates the designated goods with the received management data, generates a predetermined offer data, and transmits it to a mail-order firm through a communication network in order to offer a purchase of goods. When the mail-order firm receives the offer, the firm causes a distributor to distribute the designated goods. In the case of cash on delivery also, namely the distributor hands over the goods to the purchaser and receives the payment, the purchaser and the distributor requires a settlement of account to the mail-order firm with the both person's cellular phone, and an account center connected with the mail-order firm in the communication network performs an adequate settlement.

## Description

### BACKGROUND OF THE INVENTION

### 1. Field of the Invention

The present invention relates to a system and a method of mail-order business for selling goods and providing services through using a communication network.

### 2. Description of the Related Art

Conventionally, as one of the mail-order business methods, a method utilizing a television broadcast is well known. This known method mainly comprises the following processes. First, a mail-order firm broadcasts a goods presentation program on television, next an audience who watched the program offers a purchase of a desired goods to the mail-order firm by telephone or facsimile, and then the goods as designated by the audience is distributed from the firm to the audience(purchaser).

However, the above-mentioned conventional method of mail-order business utilizing the television broadcast has some problems. One problem is that it is troublesome for the purchaser to inform the mail-order firm of his or her will of purchase by telephone or facsimile, and the other problem is that there may occur useless troubles in the process of mail-order business since it is not always easy for the mail-order firm to surely grasping the purchaser's will from the purchaser's speech on telephone or a description of the purchaser's facsimile letter.

The objects of the present invention is to overcome such conventional problems, that is, to provide a system and a method for the mail-order business which allows an audience on television to transmit a clear will of goods purchase to the mail-order firm by a simple operation without using a personal computer, and also in which an account settlement procedure thereof is carried out by a simple operation, so that the whole convenience of the mail-order business can be improved.

### SUMMARY OF THE INVENTION

To achieve the object mentioned above, according to an aspect of the present invention, there is provided a mail-order business system comprising a terminal device for receiving and displaying a homepage information and a management information of goods/service sold by a mail-order firm through any one of a television broadcast and a communication network, and a mobile communication apparatus for receiving the management information displayed on the terminal device and transmitting an offer data of purchase of the goods/service to the mail-order firm, wherein the mobile communication apparatus comprises an optical signal receiver for optically reading the management information, which is formed by optical signals, displayed on the terminal device, an operation unit for designating a purchaser's desired goods/service, an offer data generator for generating the offer data of the designated goods/service based on the management information optically read out by the optical signal receiver, and a transmitter/receiver for transmitting the offer data to the mail-order firm and receiving a confirmation data from the mail-order firm.

According to another aspect of the present invention, the mobile communication apparatus further comprises a collator for collating the designated goods/service with the management information, and the collated data is fed to the offer data generator.

According to the other aspect of the present invention, there is provided a method for a mail-order business comprising the steps of displaying a homepage information and a management information of goods/service sold by a mail-order firm through any one of a television broadcast and a communication network on a terminal device of a purchaser, optically reading the management information, which is formed by optical signals, displayed on the terminal device by an optical signal receiver of a mobile communication apparatus of the purchaser, designating a purchaser's desired goods/service by an operation of the mobile communication apparatus, generating an offer data of the designated goods/service based on the optically read out management information and the designated goods/service, transmitting the offer data to the mail-order firm; and receiving a confirmation data thereof from the mail-order firm.

According to the further aspect of the present invention, the step of generating the offer data includes a step of collating the designated data and the management data.

In addition, the present invention provides the mail-order business method further comprising the steps of instructing a distributor and a service provider to supply the designated goods/service to the purchaser when the offer data is transmitted to the mail-order firm, and settling an account of the goods/service after the designated goods/service is supplied.

In accordance with the mail-order system and method of the present invention, the purchaser can easily give an offer of purchase of goods or service by means of his or her own cellular phone, and on the other hand, the mail-order firm can expand the sale of goods or service to unnamed or many audiences through the media of television broadcast or the communication network. These are superior effects as caused by the present invention. Furthermore, since the electronic settlement can be conducted, the further high reliability of mail-order business is obtained.

### BRIEF DESCRIPTION OF THE DRAWINGS

These and other objects and advantages of the present invention will become clear from the following description with reference to the accompanying drawings, wherein:
Fig.1 is a schematic view showing a whole structure of a mail-order system according to an embodiment of the present invention;
Fig.2 is a schematic view showing an example of goods presentation program on a television display;
Fig.3 is a block diagram showing a structure of a cellular phone according to the present embodiment; and

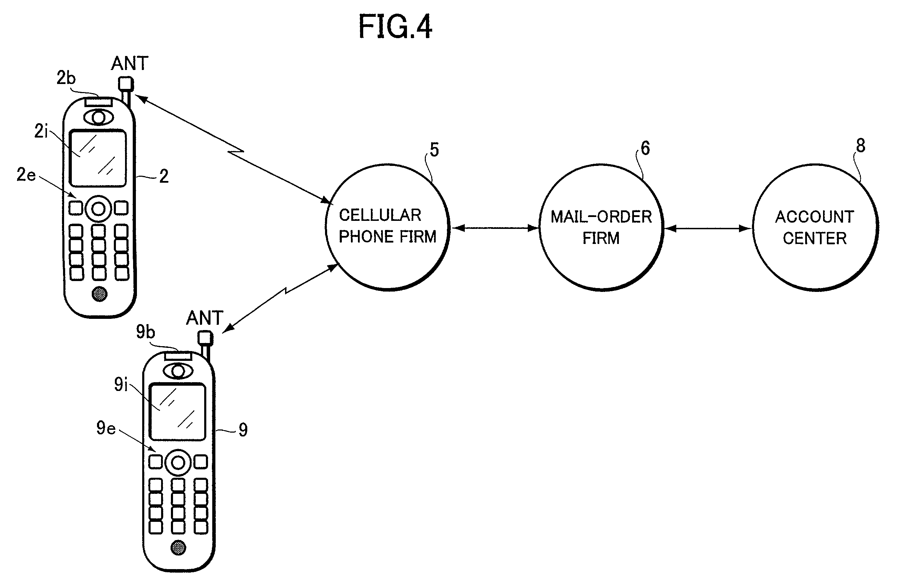

Fig. 4 is a view for explaining an operation in which an account settlement is carried out in the mail-order system according to the embodiment of the present invention.

### DETAILED DESCRIPTION OF THE PREFERRED EMBODIMENT

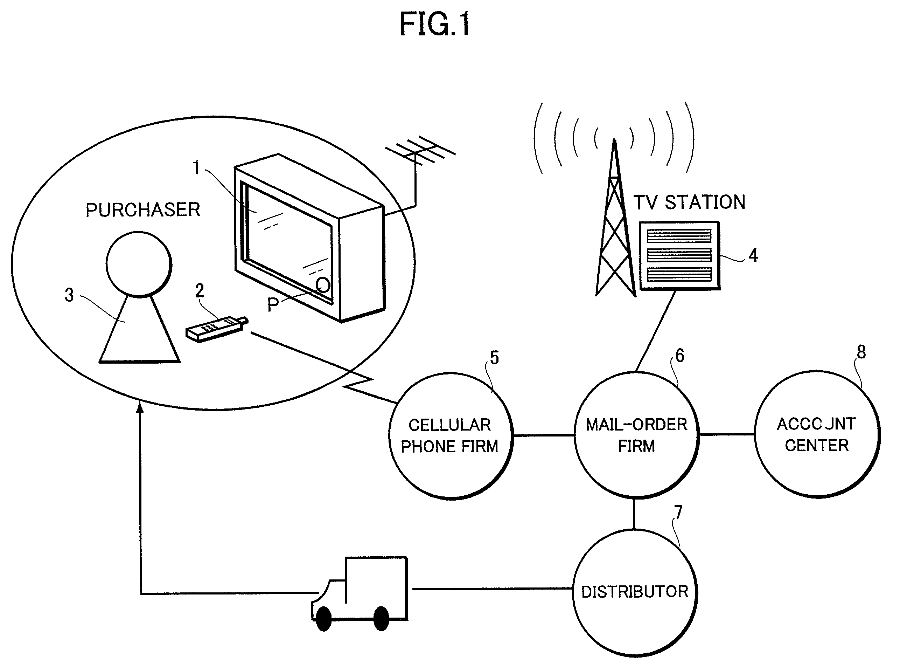

In Fig. 1, a mail-order business system (hereinafter, referred to as mail-order system) performs a business of mail-order by utilizing a television set 1 and a cellular phone 2.

A mail-order business firm (hereinafter, referred to as mail-order firm) 6 produces a television program (hereinafter, referred to as presentation program) for introducing goods and services to be sold, which is transmitted from a television broadcast station 4 to each television set 1 of unnamed or many audiences (purchaser) 3. The presentation program includes not only an exclusive one for introducing goods or the like, but also non-exclusive one in which goods information is divisionally displayed with a form of a so-called homepage information as a part of image of a normal television program. In the homepage information, a management information formed by an animation image or the like which is produced with a GIF (graphics interchange format) standard is displayed.

The purchaser 3, who watched the presentation program on television, communicates with the mail-order firm 6 through a network of a cellular phone firm 5 by means of a cellular phone 2, whereby the purchaser 3 gives an offer of purchase of a desired goods or service among the broadcasted ones to the mail-order firm.

The mail-order firm 6, which receives the purchase offer, instructs a distributor 7 to send the designated goods to the purchaser 3 in the case where the goods is selected, or instructs a provider of service (not shown) to perform the designated service for the purchaser 3 in the case where the service is selected. Moreover, the distributor 7 or the service provider performs a settlement of payment corresponding to the goods or service to be supplied through an account center 8, which is connected with the mail-order firm 6 through a network such as an Internet.

Next, an operation and a function of the mail-order system according to the present invention will be described in detail.

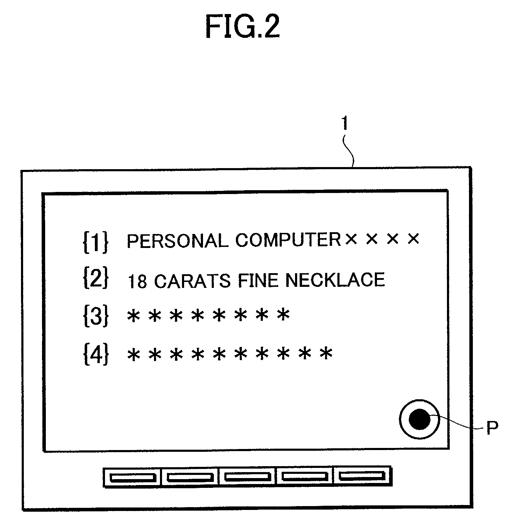

When the mail-order firm 6 produces the presentation program of goods or service, a management data Dp corresponding to the introduced goods or service is included in an image signal (composite signal). For example, the presentation program is produced in such a manner that the management data Dp including an identification code data IDb of the mail-order firm 6 with a telephone number thereof, an identification code data IDs for identifying the goods and the service, and a time data Dt for showing day and time of the broadcast is displayed as an image pattern P of an optical signal in a part of display screen displaying a reproduced image when the presentation program is broadcasted on the television set 1, wherein each introduction of a plurality of goods and service is reproduced as shown in Fig. 2.

Specifically, after the management data Dp is made by combining the above data IDb, IDs, and Dt, the management data Dp is encrypted by a predetermined encryption key so as to produce two values of time series data. In addition, the time series data is mixed into the composite signal of the frame (or field) image data for displaying goods and service having a synchronization with a frame (or field) period, so that the image pattern P as the optical signal winking at high speed can be reproduced and displayed. Furthermore, when the homepage information made by the GIF standard or the like is displayed within a display area of a normal program, the management data Dp may be displayed in the homepage area which is one portion of a normal display area.

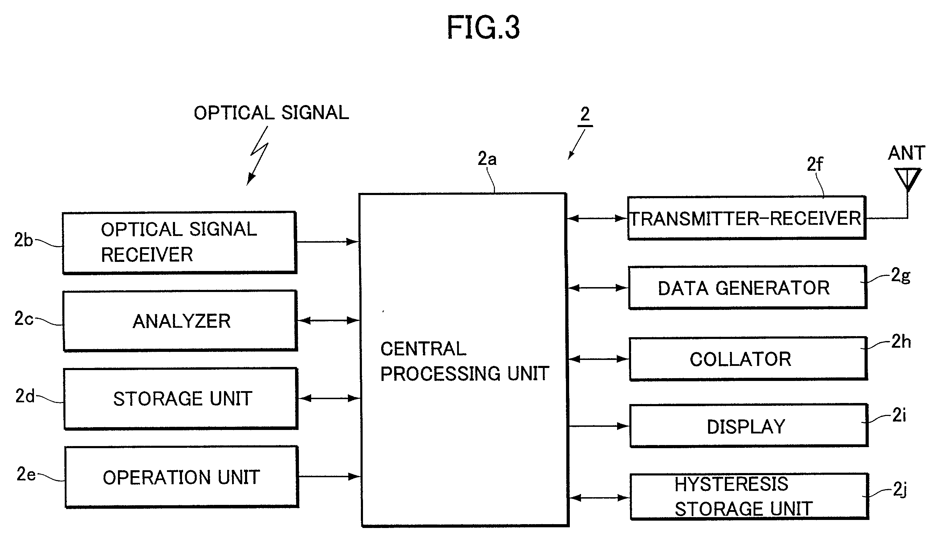

As shown in Fig. 3, the cellular phone 2 comprises each section of the following, i.e., a central processing unit 2a having a calculation control function such as a micro processor unit (MPU), an optical signal receiver 2b for receiving the image pattern P displayed on the television set 1, an analyzer 2c which decodes the signals detected by the optical signal receiver 2b, thereby reproduces the management data Dp, and then allows a storage unit 2d to store the reproduced data, and an operation unit 2e. Moreover, the central processing unit 2a controls a whole operation of the cellular phone 2, and the operation unit 2e has a so-called function key for designating a telephone number and selecting a various kind of operation mode.

In addition, the cellular phone 2 is further provided with each section of an antenna ANT for transmitting or receiving a radio communication through a mobile communication net work, a transmitter/receiver 2f, a data generator 2g, a collator 2h, a display 2i, and a hysteresis storage unit 2j.

Specifically, the collator 2h collates the designated data with the management data Dp stored in the storage unit 2d when the purchaser designates the desired goods or service by operating the operation unit 2e, and reads out the management data Dp corresponding to the designated goods or service so as to supply it to the data generator 2g.

The data generator 2g combines the purchaser's data for specifying who the purchaser is, e.g. telephone number or address as being preset in the cellular phone 2 with the management data Dp fed from the collator 2h, thereby generating an offer data to the mail-order firm. Furthermore, the offer data is encrypted with a predetermined encryption key to be fed to the transmitter/receiver 2f. Then, the transmitter/receiver 2f communicates with the mail-order firm 6 through the telephone number included in the management data Dp, wherein the encrypted offer data is transmitted to the mail-order firm 6 through a communication net work of the cellular phone firm 5.

The display 2i is formed by a light and thin displaying device such as a liquid crystal display, which functions as a display of an operation menu and the like for the mail-order system as well as a normal telephone display for displaying a telephone number of a call sender and the like. Further, the display 2i displays an account information also when a settlement of account is performed.

The hysteresis storage unit 2j is formed by a nonvolatile semi-conductor memory or the like, which stores and manages the offer data and the account settlement data as to whether or not the payment has been already made by the purchaser as a hysteresis data. Moreover, if the purchaser 3 operates a predetermined function key in the operation unit 2e, the hysteresis data in the hysteresis storage unit 2j is displayed on the display 2i so as to confirm the content of the hysteresis.

The purchaser 3 can give an offer of purchase to the mail-order firm 6 through operating the cellular phone 2 as follows.

First, the presentation program of the mail-order firm 6 is allowed to be displayed through the television set 1. Hereby, the image regarding the goods or service which the mail-order firm has an intention to sell is reproduced and displayed on television, and also the management data Dp is displayed as the image pattern P thereon.

Here, the purchaser 3 directs the optical signal receiver 2b mounted on the cellular phone 2 toward the image pattern P and on-operates the predetermined function key of the operation unit 2e. Thereby, the reception of image pattern P is started, and then the management data Dp is stored into the storage unit 2d through the analyzer 2c.

Next, in accordance with instructions on the display or a speech examination of commentator in the presentation program, the purchaser 3 designates the desired goods or service through operating the operation unit 2e. After performing a confirmation of the designation, the offer data is generated by each operation of the collator 2h and the data generator 2g, which is transmitted to the mail-order firm 6 through the transmitter/receiver 2f.

For example, when a personal computer xxxx as shown at an item [1] displayed in the reproduced image is purchased, the purchaser 3 operates a numeric key "1" in the operation unit 2e to designate the desired goods. Furthermore, the commentator of goods or service on television may invite the audience to designate the number of each item by utilizing the numeric key in the operation unit 2e, and the purchaser 3 can designate the desired goods or service through operating the key in accordance with the invitation. Moreover, the other designating method, of course, such as one of inputting the number with a plurality of figures as a goods code or a service code through the operation unit 2e may be used.

Then, when the purchaser 3 gives an offer of purchase by using the cellular phone 2, a database server (not shown), managed and administered by the mail-order firm 6 automatically inputs the offer data and decodes it, so that a legitimacy of the offer data can be confirmed. After completion of the confirmation, the offer data is returned to the cellular phone 2 through the communication network.

Next, after the confirmed offer data is returned to the cellular phone 2 and then the transmitter/receiver 2f receives it, the information of the confirmed offer data is displayed on the display 2i so as to allow the purchaser 3 to finally confirm the correctness of the data. After the final confirmation of the purchaser 3, a final confirmation data is generated through the operation of the both collator 2h and data generator 2g when operating the predetermined function key in the operation unit 2e, which is transmitted to the mail-order firm 6 from the transmitter/receiver 2f.

The final confirmation data is received by the database server of the mail-order firm 6 where the legitimacy of the final confirmation data is confirmed. After that, the distribution confirmation data for sending goods or providing service is again sent back to the cellular phone 2, and further the distribution of goods or providing of service to the purchaser 3 is instructed to the distributor 7 or the provider of service, respectively. Furthermore, the database server of the mail-order firm 6 stores and manages each communication data conducted at least from timing of receiving an offer from the purchaser 3 until timing of sending the instruction to the distributor 7 or the service provider as a hysteresis data.

In addition, the hysteresis storage unit 2j of the cellular phone 2 also stores and manages each communication data conducted from timing of sending an offer of purchase to the mail-order firm until timing of receiving the distribution confirmation data.

Next, when the distributor 7 distributes the designated goods to the purchaser 3, and the purchaser 3 pay the price thereof, the purchaser 3 and the distributor 7 communicate with the mail-order firm 6 for the settlement, using the cellular phone 2 of the purchaser 3 and a cellular phone 9 of the distributor 7, respectively. That is, the purchaser 3 transmits the confirmation data that the designated goods was received, and the payment was made to the distributor 7 through operating the predetermined function key of the operation unit 2e mounted on the cellular phone 2, and also the distributor 7 transmits the confirmation data that the designated goods was delivered, and the payment was received through operating the predetermined function key of an operation unit 9e mounted on the cellular phone 9.

Furthermore, when the database server of the mail-order firm 6 receives these confirmation data, these data is collated with the stored hysteresis data, wherein the mail-order firm 6 instructs the account center 8 to settle the purchase procedure in the case where no mistake is confirmed. Further, when a result of the settlement is returned from t' account center, the data indicating the completion of settlement is transmitted to each cellular phone of the purchaser 3 and the distributor 7, and then the settlement data may be stored and managed in the database server of the mail-order firm 6 as a hysteresis data.

Thus, when the settlement data is received, the information of the settlement data is displayed on the displays 2i and 9i of the cellular phones 2 and 9, respectively, wherein it can be determined that the suitable business is completed through that each display is confirmed by the purchaser 3 and the distributor 7.

Moreover, although the case of cash on delivery is explained in the above-mentioned method of settlement, the purchaser 3 may make an payment by means of his or her credit card or money card, i.e., an electronic settlement, wherein the purchaser 3 inputs the registered number of the credit card or the like, using the cellular phone 2, and the account center 8 confirms the legitimacy of the inputted number, so that the electronic settlement can be conducted. The result of the electronic settlement may be transmitted to each cellular phone 2, 9 of the purchaser 3 and the distributor 7 through the database server of the mail-order firm 6.

Additionally, in the case that the service provider provides the service and receives the payment also, the settlement is performed in the same way as the delivery of goods as mentioned above. That is, the purchaser 3 and the service provider require the settlement to the mail-order firm 6 and the account center 8 by means of the respective cellular phone 2, 9, so that the suitable business can be conducted.

As mentioned above, according to the mail-order system of the present invention, the purchaser can easily give an offer of purchase of goods or service by means of his or her own cellular phone, and on the other hand, the mail-order firm can expand the sale of goods or service to unnamed or many audiences through the mass media of television broadcast, wherein such an superior effect can be caused.

Moreover, the above description is concerned in an embodiment for explaining the present invention, and therefore in the present invention, the various types of mail-order system may be constructed through combining the television broadcast medium for supplying information to the unnamed or many audiences and a communication net work medium for conducting a suitable business with a particular purchaser. Also, a still more reliable business method can be accomplished by applying a robuster technique for decoding an encryption, which also is included in the present invention.

Furthermore, it has been described that the management data Dp regarding goods or service is transmitted to the cellular phone 3 with the image pattern P when the presentation of goods or service is given on the television broadcast. However, through the image pattern P, an application software program for realizing more effective shopping other than the management data Dp may be downloaded into the cellular phone 2. Specifically, when the purchaser 3 operates the system for purchasing the goods, the application software for giving further convenient functions to the cellular phone 2, which is preset as a part thereof into the image pattern P, may be downloaded through the image pattern P received by the optical signal receiver 2b.

Moreover, the mail-order firm 6 may download the above application software into the purchaser's cellular phone 2 through communication net work.

Further, the management data Dp as received by the optical signal receiver 2b may be first stored in the storage unit 2d. That is, after the storage, preferably, the purchaser 3 operates the predetermined function key mounted on the operation unit 2e, displays the management data Dp on the display 2i, selects and designates the desired goods or service to be purchased based on the display. After that, the offer data is generated by the data generator 2g and transmitted to the mail-order firm 6. According to such a configuration, the purchaser 3 can offer the desired goods or service even after the presentation program on television is ended, so that the further improvement of convenience can be accomplished.

Moreover, in the present embodiment, it has been described that the offer of purchase of goods or service is given through the cellular phone, but the present invention can be applied also to the mail-order system through the other mobile communication apparatus such as PDA (personal digital assistant) and the like.

The medium for supplying the goods or service information to the purchaser is not limited to the television broadcast, but may be a communication network such as an Internet, wherein the television set and a terminal device provided with a display can receive the same information.

Furthermore, the word, "mail-order business" of the present invention is not limited to such a situation as proposes a purchase of goods or the like through a communication medium, and distributes the actual goods by a transportation, but includes a situation wherein the goods such as a computer program, image information, and music information, of course, can be purchased and distributed to the terminal device such as a personal computer or the PDA through the communication network such as the Internet.

As mentioned above, according to the present invention, the purchaser can easily give an offer of purchase of goods or service by means of his or her own cellular phone, and on the other hand, the mail-order firm can expand the sale of goods or service to unnamed or many audiences through the media of television broadcast or the communication network. These are superior effects as caused by the present invention. Furthermore, since the electronic settlement can be conducted, the further high reliability of mail-order business is obtained.

While the invention has been described in conjunction with preferred specific embodiment thereof, it will be understood that this description is intended to illustrate and not limit the scope of the invention, which is defined by the following claims.

## Claims

1. A mail-order business system comprising:
a terminal device for receiving and displaying a homepage information and a management information of goods/service sold by a mail-order firm through any one of a television broadcast and a communication network; and
a mobile communication apparatus for receiving said management information displayed on said terminal device and transmitting an offer data of purchase of the goods/service to the mail-order firm,
wherein said mobile communication apparatus comprises:
optical signal receiving means for optically reading said management information, which is formed by optical signals, displayed on said terminal device;
designating means for designating a purchaser's desired goods/service;
offer data generating means for generating said offer data of the designated goods/service based on said management information optically read out by said optical signal receiving means; and
transmitting/receiving means for transmitting said offer data to the mail-order firm and receiving a confirmation data from the mail-order firm.

2. The mail-order business system according to claim 1, further comprising:
instruction means for instructing a distributor and a service provider to supply the designated goods/service to the purchaser when said offer data is transmitted to the mail-order firm; and
settlement means for settling an account of the goods/service.

3. The mail-order business system according to claim 1, wherein said management information includes an identification code data of the mail-order firm containing a telephone number thereof, an identification code data for identifying the goods/service, and a time data for showing day and time of the broadcast.

4. The mail-order business system according to claim 1, wherein said mobile communication apparatus further comprises:
collating means for collating the designated goods/service with said management information, said collated data being fed to said offer data generating means.

5. The mail-order business system according to claim 1, wherein said mobile communication apparatus further comprises:
a central processing unit for integrating each means;
analyzing means for analyzing encrypted management data sent from said terminal device;
storage means for storing the analyzed data;
display means for displaying the generated offer data and the confirmation data; and
hysteresis storage means for storing a hysteresis data including the offer data and the confirmation data.

6. The mail-order business system according to claim 4, wherein said mobile communication apparatus further comprises:
a central processing unit for integrating each means;
analyzing means for analyzing encrypted management data sent from said terminal device;
storage means for storing the analyzed data;
display means for displaying the generated offer data and the confirmation data; and
hysteresis storage means for storing a hysteresis data including the offer data and the confirmation data.

7. The mail-order business system according to claim 1, wherein said terminal device is a television set.

8. The mail-order business system according to claim 1, wherein said mobile communication apparatus is a cellular phone.

9. A mail-order business system comprising:
a terminal device for receiving and displaying a homepage information and a management information of goods/service sold by a mail-order firm through any one of a television broadcast and a communication network; and
a mobile communication apparatus for receiving said management information displayed on said terminal device and transmitting an offer data of purchase of the goods/service to the mail-order firm,
wherein said mobile communication apparatus comprises:
an optical signal receiver for optically reading said management information, which is formed by optical signals, displayed on said terminal device;
an operation unit for designating a purchaser's desired goods/service;
an offer data generator for generating said offer data of the designated goods/service based on said management information optically read out by said optical signal receiving means; and
a transmitter/receiver for transmitting said offer data to the mail-order firm and receiving a confirmation data from the mail-order firm.

10. The mail-order business system according to claim 9, further comprising:
an instruction section for instructing a distributor and a service provider to supply the designated goods/service to the purchaser when said offer data is transmitted to the mail-order firm, said instruction section being included in a database server of the mail-order firm; and
settlement section for settling an account of the goods/service, said settlement section being connected with the database server.

11. The mail-order business system according to claim 9, wherein said management information includes an identification code data of the mail-order firm containing a telephone number thereof, an identification code data for identifying the goods/service, and a time data for showing day and time of the broadcast.

12. The mail-order business system according to claim 9, wherein said mobile communication apparatus further comprises:
a collator for collating the designated goods/service with said management information, said collated data being fed to said offer data generator.

13. The mail-order business system according to claim 9, wherein said mobile communication apparatus further comprises:
a central processing unit for integrating each unit;
an analyzer for analyzing encrypted management data sent from said terminal device;
a storage unit for storing the analyzed data;
a display unit for displaying the generated offer data and the confirmation data; and
a hysteresis storage unit for storing a hysteresis data including the offer data and the confirmation data.

14. The mail-order business system according to claim 12, wherein said mobile communication apparatus further comprises:
a central processing unit for integrating each unit;
an analyzer for analyzing encrypted management data sent from said terminal device;
a storage unit for storing the analyzed data;
a display unit for displaying the generated offer data and the confirmation data; and
a hysteresis storage unit for storing a hysteresis data including the offer data and the confirmation data.

15. The mail-order business system according to claim 9, wherein said terminal device is a television set.

16. The mail-order business system according to claim 9, wherein said mobile communication apparatus is a cellular phone.

17. A method for a mail-order business, said method comprising the steps of:
displaying a homepage information and a management information of goods/service sold by a mail-order firm through any one of a television broadcast and a communication network on a terminal device of a purchaser;
optically reading said management information, which is formed by optical signals, displayed on said terminal device by an optical signal receiver of a mobile communication apparatus of the purchaser;
designating a purchaser's desired goods/service by an operation of said mobile communication apparatus;
generating an offer data of the designated goods/service based on said optically read out management information and said designated goods/service;
transmitting said offer data to the mail-order firm; and
receiving a confirmation data thereof from the mail-order firm.

18. The method for the mail-order business according to claim 17, said method further comprising the steps of:
instructing a distributor and a service provider to supply the designated goods/service to the purchaser when said offer data is transmitted to the mail-order firm; and
settling an account of the goods/service after the designated goods/service is supplied.

19. The method for the mail-order business according to claim 17, wherein said step of generating the offer data includes a step of collating said designated data and said management data.

20. The method for a mail-order business according to claim 17, said method further comprising the steps of:
analyzing encrypted management data sent from said terminal device by an analyzer of the mobile communication apparatus;
storing the analyzed data by a storage unit of the mobile communication apparatus;
displaying the generated offer data for confirmation of the purchaser by a display unit of the mobile communication apparatus; and
storing a hysteresis data including the offer data and the confirmation data by a hysteresis storage unit of the mobile communication apparatus.
